# EUROPEAN PATENT APPLICATION

(11) **EP 4 008 690 A1**
(43) Date of publication of application: **08.06.2022**
(21) Application number: 20212285.9
(22) Date of filing: 07.12.2020
(51) Int. Cl.: C02F 3/28, B01F 5/10, B01F 5/02

(54) **APPARATUS AND METHOD FOR IMPROVED PURIFICATION OF WASTEWATER**

(71) Applicant: Paques I.P. B.V., 8561 EL Balk (NL)
(72) Inventor: Prins, Rienk, 8561 EL Balk (NL); Faber, Jelle, 8561 EL Balk (NL); Vogelaar, Jacob Cornelis Theodorus, 8561 EL Balk (NL)
(74) Representative: Nederlandsch Octrooibureau

(57) **Abstract**

Biomass recirculation unit for an anaerobic purification apparatus of fluid, comprising: an inlet system configured to receive influent fluid from outside, a biomass collecting system for drawing off biomass from a middle section in the reactor tank and bringing the biomass into the biomass recirculation unit, a mixing segment for being connected to the inlet system and the biomass collecting system, and for receiving and mixing the influent fluid and the biomass, and an outlet system for discharging a mixture of the influent fluid and the biomass into the lower section of the reactor tank, the inlet system comprising a constricted nozzle for, as the influent fluid flows from the inlet system to the mixing segment through the constricted nozzle, creating a suction effect causing the biomass collecting system to draw off the biomass from the middle section of the reactor tank into the mixing segment.

## Description

### Field of the invention

The present invention relates to a biomass recirculation unit for an anaerobic purification apparatus, for anaerobic purification of a fluid such as wastewater. The present invention also relates to an anaerobic purification apparatus comprising the biomass recirculation unit, and to a method for anaerobic purification of a fluid such as wastewater.

### Background art

A multitude of methods can be used for purification of wastewater. A fluid is considered a wastewater if it contains biologically degradable components. One of such methods is the anaerobic purification of wastewater. This method is mostly applicable for wastewaters that are highly polluted with organic impurities and that preferably have a fluid temperature above 20 degrees Celsius. Most common anaerobic treatment methods use so-called up-flow reactors such as the UASB (Up-flow Anaerobic Sludge Blanket), EGSB (Expanded Granular Sludge Blanket) as described in EP 1 979 273 B1, or internal circulation reactors such as the ones described in EP 0 170 332 B1 or in WO 2012/005592 A1. Such reactors are highly effective in treating said highly polluted wastewaters, containing especially soluble components.

In these reactors, under the right up-flow conditions, natural aggregates of micro-organisms can form. Such aggregates have a higher settling velocity and can be retained in the reactor by gravity separation while the wastewater passes through. The lighter floes, or non-aggregated micro-organisms will be flushed out when the settling velocity of such flocs is lower than the design value for the gravity separation device. This is a desirable selection mechanism as it creates a type of biomass, generally named granulated biomass or granulated sludge, that has a high settling velocity, and a high density. These characteristics enable the up-flow reactors to operate at high liquid throughputs and high volumetric conversion rates (VCR), expressed as kilograms (kg) chemical oxygen demand (COD) converted per cubic meter (m3) reactor volume per day. Achieving a high reactor VCR is most desirable since the allowable VCR dictates the reactor size for a given wastewater flow and hence the economic effectiveness of the up-flow reactor. Therefore, past developments have focused on increasing the VCR which has notably led to the development of reactors with VCR 7-12 kg COD converted per m3 reactor volume per day, reactors with VCR 10 - 18 kg COD converted per m3 reactor volume per day, and reactors with VCR 15 - 25 kg COD converted per m3 reactor volume per day.

There are however factors that limit the maximum possible volumetric conversion rate. It is known that the micro-organisms themselves are in many cases not limiting. This can be explained by a simple calculation: Granulated biomass typically has a density of 65 kg volatile suspended solids (VSS)/m3. The conversion rate of the micro-organisms is expressed as specific methanogenic activity (SMA) and is typically 0.7 kg COD/kg VSS^{∗}day. Up-flow reactors are normally filled for 70% of their liquid volume with granulated biomass, and hence the maximum achievable volumetric conversion rate is 65^{∗}0,7 ^{∗} 70% = 32 kg COD converted per m3 reactor volume per day. This maximum theoretical achievable rate thus exceeds the current practice.

One of the major factors that limit the current up-flow reactors is that under all conditions, the quantity of granulated biomass should remain constant in the reactor even while some biomass may be lost with the purified wastewater passing through. If this is not the case, then the up-flow reactor will lose its biological conversion capacity and both the volumetric conversion rate and treatment efficiency cannot be maintained. The quantity of the granular biomass in the reactor depends on the balance between the growth of new granular biomass and the loss of biomass with the effluent. Under ideal conditions, the growth of biomass exceeds the losses and a net biomass surplus develops. In such cases, granular biomass is harvested from the reactor and may be used as start-up inoculum for new reactors. In cases where the loss of granulated biomass exceeds the growth, then additional granulated biomass should be supplied to maintain the conversion rate.

The growth rate of the biomass is an inherent characteristic of the anaerobic micro-organisms and has a dependency on the nature of the organic pollutants in the wastewater. In other words, the type of anaerobic up-flow reactor has no effect on the growth rate of the biomass. It can however have an effect on the form in which the anaerobic biomass develops, being in a desirable granular form, or in a more flocculent form that is easily lost with the treated wastewater.

The loss of biomass with the treated wastewater can be controlled by the type of up-flow reactor. There are two main phenomena that lead to loss of anaerobic biomass. These are:
1. Gas bubbles being produced in the granulated biomass, which can increase the buoyancy of the granules when the bubbles do not detach in time. Floating of granulated biomass can lead to loss of granulated biomass with treated (waste) water since separation is based on gravity.
2. Granulated biomass can be shorn by intensive mixing into a more flocculent form. The flocculent biomass does not have the same settling characteristics as the granulated biomass and is subsequently lost with treated (waste) water.

Several methods have been used to overcome the problem of flotation of granular biomass. For instance US 2011/0236274 A1 uses a device that tries to make use of the floating properties of the biomass and separates floating granulated biomass from reactor liquid in a degassing device. WO 2012/005592 A1 uses a device in which the granulated biomass is separated under a higher hydrostatic pressure in the reactor. Under such conditions, attached gas bubbles are dissolved again in the liquid and the buoyancy of the granulated biomass is decreased.

Loss of flocculent biomass due to shearing of granulated biomass is controlled by the strength of the granules that develop, in relation to the shear inside the reactor. Pereboom (1997) has demonstrated that systems in which the biomass grows slowly have a higher granule strength, i.e., are less susceptible to abrasion or disintegration than systems where the biomass grows rapidly. A slow growth rate also implies a (s)low conversion rate. This is thus conflicting with the objective to design and operate anaerobic up-flow reactors at high volumetric conversion rates. The optimum balance between slow growth rates and high volumetric conversion rates can only be found by ensuring that the organic pollutants are well mixed with the granulated biomass, so that the substrate concentration is as low as possible in the entire reactor. This ensures that on average all granulated biomass sees the same low substrate concentration and contributes to the overall conversion, while the growth rate remains moderate as the growth rate depends on the substrate concentration. Under such conditions, granules of sufficient strength can develop. There is thus a trade-off between intensive mixing to achieve this goal, while avoiding excessive shear.

Avoiding excessive shear in the up-flow reactor can be ensured by e.g., not using high speed rotating parts in the up-flow reactor, such as mixers or pumps that recirculate liquid and/or biomass. Nevertheless, sufficient mixing of wastewater with granulated biomass needs to be ensured to achieve the desired conversion rates. Otherwise, a fraction of the anaerobic biomass will be overloaded with pollutants while another fraction will receive too few pollutants to contribute effectively to the conversion process. Several methods are described in the art to overcome this problem. For instance WO 2007/078195 A1 uses a method in which treated (clean, purified) effluent is pumped back into the bottom of the reactor to increase the up-flow velocity and thereby the mixing. Treated effluent needs to pass through at least part of an effluent separator to separate granular biomass from liquid before the liquid is pumped back. In another embodiment of WO 2007/078195 A1, it is mentioned that the wastewater may be introduced at different heights inside the reactor and thereby promote the mixing of the influent pollutants with the granular biomass. WO 2007/078195 A1 thus requires the need for at least part of a separator to recycle effluent to the reactor bottom and inlet points at various heights in the reactor which are difficult to assemble.

EP 0 170 332 B1 describes a device that makes use of the created biogas to produce a gas lift that recirculates fluid from the upper section of the reactor to the bottom section of the reactor. This creates additional mixing in the reactor bottom where influent is mixed in a gentle way with internal recirculation water. The mixed water then passes upwards through the sludge blanket consisting of granulated biomass. However, EP 0 170 332 B1 requires complex internal structures to capture the biogas, separate it from the water and recycle it back to the bottom part of the reactor.

There is thus a need for a method and system for anaerobic purification of fluid such as wastewater, which achieves an improved balance between slow growth rates and high volumetric conversion rates, thereby achieving acceptable volumetric conversion rates while keeping the biomass granulated, avoiding excessive shear.

### Summary of the invention

According to a first aspect, the invention provides a biomass recirculation unit for an anaerobic purification apparatus of a fluid such as wastewater, the biomass recirculation unit comprising: an inlet system configured to be located in a lower section inside a reactor tank of the apparatus, and configured to receive influent fluid from outside the apparatus, a biomass collecting system configured to draw off biomass from a middle section in the reactor tank and bring the biomass into the biomass recirculation unit, a mixing segment configured to be located in a lower section inside the reactor tank, connected to the inlet system and the biomass collecting system, and configured to receive and mix the influent fluid and the biomass, and an outlet system connected to the mixing segment and configured to discharge a mixture of the influent fluid and the biomass into the lower section of the reactor tank, wherein the inlet system comprises a constricted nozzle configured to, as the influent fluid flows from the inlet system to the mixing segment through the constricted nozzle, create a suction effect which causes the biomass collecting system to draw off the biomass from the middle section of the reactor tank into the mixing segment.

The present invention aims to overcome the above objections and creates optimal mixing by not only recirculating liquid to the reactor bottom, but especially by recirculating granulated biomass from a higher part in the reactor, into the lower part where it is brought in contact with organic pollutants. Hence, instead of recirculating liquid, the granulated biomass is recycled to the reactor bottom. The biomass recirculation is driven according to a jet principle, in which the motive liquid may consist of influent, or a mixture of influent and effluent (treated fluid), or even a mixture of influent, effluent and recycled granulated biomass. The motive liquid may create a suction effect when passing through the constriction or constricted nozzle, that draws granulated biomass from a middle part of the reactor, where it may be low loaded in organics, to the bottom of the reactor where it is mixed with the incoming (influent) fluid (wastewater), which may in some embodiments include also recycled effluent, thereby creating an upward velocity through the reactor. A jet system such as the one just described according to the present invention allows for little shear to be created, it has no rotating parts while the mechanical structure remains simple, thereby overcoming disadvantages of inventions known in the art yet preserving the granularity of the biomass.

According to a second aspect, the invention provides an anaerobic purification apparatus of a fluid such as wastewater, comprising: a reaction tank; at least one biomass recirculation unit as indicated above, and at least one biomass separation device located in the lower section inside the reaction tank, the at least one biomass separation device configured to receive fluid from an upper section of the reaction tank, to separate (granulated) biomass from the liquid in the fluid, and to separately discharge the biomass and the liquid.

The present invention thus advantageously provides an anaerobic purification apparatus, an up-flow reactor, for purification of wastewater, which has a simple structure, prevents loss of granules due to flotation and allows for an improved mixing by recirculation of biomass and by bringing recirculated biomass in contact again with influent fluid (wastewater), while preserving a good quality of granulated biomass.

The at least one biomass separation device is preferably located in a lower section of the reactor tank, such as in contact with the bottom of the reactor. This avoids the difficulties when these devices have to be placed in an upper section while it also promotes improved retention of granulated biomass.

Throughout the description, upper section/part may refer to an upper half of the reactor tank height, or an upper third of the reactor tank, or an upper quarter of the reactor tank. Similarly, lower section/part may refer to a lower half of the reactor tank height, a lower third, or a lower quarter. The middle section can be considered to be a region comprising the middle of the height of the reactor tank, such as a middle third, or the second or third quarter of the height of the reactor tank. The middle section may be a section of the reactor tank where biomass and influent water are well mixed, that is, a section where biomass and influent are better mixed with each other than at the lower section of the reactor tank.

Throughout the text, the words solids and (granulated) biomass are to be used interchangeably, as the solid particles present in the reactor are biomass. Similarly, throughout the description, reactor, reactor tank, and reactor chamber are to be used interchangeably, and influent and influent fluid and influent water are also to be considered interchangeably. Similarly, biogas and gas are to be considered interchangeably throughout the description.

According to embodiments of the invention, the biomass collecting system comprises at least one biomass collecting pipe with an upper end located in the middle section inside the reactor tank, at a height from a bottom of the reactor tank between 20% of a height of the reactor tank and 60% of the height of the reactor tank, more preferably between 25% and 60% and even more preferably between 25% and 50%. For example, the height of the at least one biomass collecting pipe may be between 1 and 6 meters, more preferably between 2 and 5 meters, and more preferably between 4 and 5 meters from the bottom of the reactor tank, wherein a height of the reactor tank is between 8 and 16 meters.

According to embodiments of the invention, the mixing segment corresponds to a mixing chamber, wherein the inlet system comprises at least one feeding pipe, a transport pipe and at least one inlet pipe comprising the constricted nozzle, wherein a first end of the at least one feeding pipe is configured to receive the influent fluid and a second end is connected to the transport pipe, wherein the transport pipe is located inside the mixing chamber, and wherein the transport pipe is further connected to the at least one inlet pipe, so that the influent fluid exits the transport pipe and enters the mixing chamber via the constricted nozzle of the at least one inlet pipe.

According to embodiments, the biomass collecting system is configured to discharge the biomass into the mixing chamber so that the biomass is mixed with the influent fluid which enters the mixing chamber via the constricted nozzle of the at least one inlet pipe. The mixing segment of the biomass recirculation unit may thus be, at least in some embodiments, a mixing chamber, which is configured to receive biomass from one or more biomass collecting systems, and to receive liquid from the inlet system, as and the inlet system may discharge liquid via one or more (constricted) discharge nozzles into the mixing chamber, thereby creating an under pressure in the mixing chamber, that draws biomass from the biomass collecting system and discharging this mixture of liquid and biomass via the outlet system into the reaction tank.

According to embodiments, the outlet system comprises at least one outlet pipe connected on a first end to the mixing chamber and on a second end discharging into the lower section of the reactor tank. The outlet system may also consist of an opening in the mixing chamber, so that the mixture of fluid and biomass passes from the mixing chamber through the opening into the reactor tank.

According to embodiments, the at least one biomass separation device comprises a substantially vertical central pipe and at least one concentric enclosure surrounding the central pipe and defining at least one concentric cavity, wherein the central pipe is configured to receive the fluid from the upper section of the reactor tank and to allow the fluid to flow downwards until a bottom section of the biomass separation device, and wherein the at least one concentric cavity comprises a plurality of spiral-shaped channels configured to allow the fluid to flow upwards and cause the biomass to slide downwards.

According to embodiments, a top section of the at least one biomass separation device located above the at least one concentric enclosure is connected to an effluent system configured to carry the clean liquid that has flowed upwards out of the apparatus. With this structure, the biomass separation device has good separating properties and can occupy less volume than other known settlers, while being structurally stable, as the at least one concentric enclosure can be substantially cylindrical.

According to embodiments, the apparatus comprises at least one gas separation device located in the upper section of the reactor tank, wherein a fluid outlet of the at least one gas separation device is connected to a downer pipe which corresponds to or is connected to the central pipe of the at least one biomass separation device.

In embodiments, the clean liquid (effluent) that is discharged from the up-flow reactor through the effluent system is mixed with influent water and is pumped back into the inlet system. This facilitates an operation of the biomass recirculation unit in a situation without the presence of influent, for those conditions where influent wastewater is temporary not available.

According to embodiments, the at least one biomass separation device comprises or is connected to a biomass collection chamber located at a bottom section of the at least one biomass separation device, and configured to receive the biomass and to discharge the biomass outside of the at least one biomass separation device. The separated biomass can be used again in the purification process, and can be brought back directly to the reaction tank or to the reaction tank via the inlet system. For example, according to embodiments, the apparatus further comprises a biomass extraction pump configured to bring the biomass from the biomass collection chamber into the inlet system of the at least one biomass recirculation unit. In this way, the biomass can be mixed with the influent, and enter the sludge bed in the reaction tank through the biomass recirculation unit. In another example, according to embodiments, the apparatus further comprises a biomass extraction pump configured to bring the biomass from the biomass collection chamber into the reactor tank, that is, without being mixed with other fluid, directly into the reactor tank.

According to embodiments, the apparatus comprises a plurality of biomass separation devices and a plurality of biomass recirculation units, wherein each pair of biomass separation device and biomass recirculation unit is configured to operate according to the previous paragraphs. For example, the reactor tank can have a large size which can allocate two or more sets of biomass recirculation units, biomass separation devices, biomass collecting systems, gas separation devices, and downers, and their corresponding elements, each set next to each other. This set can even be built in a single structure, facilitating its transportation and placement. As another example, there can be several sets of biomass recirculation units and biomass separation devices, and one or more gas separation device connected to a downer, where the downer divides into several downers and each is connected to one biomass separation device. It should be evident these are examples of possible combinations, but other combinations of the different parts are also possible.

According to a third aspect, a method for anaerobic purification of a fluid such as wastewater by an anaerobic purification apparatus is provided, comprising the steps of: receiving, by a biomass recirculation unit of the apparatus, influent fluid from outside the apparatus and biomass from a middle section of a reaction tank of the apparatus, and discharging, by the biomass recirculation unit, a mixture of the influent and the biomass into a lower section of the reaction tank, wherein the biomass recirculation unit comprises an inlet system through which the influent fluid enters, and wherein the method further comprises, as the influent fluid leaves the inlet system through a constricted nozzle, creating a suction effect which causes the biomass from the middle section of the reactor tank to be drawn off into the biomass recirculation unit, to be mixed with the influent fluid.

According to embodiments, the method further comprises receiving, by a biomass separation device located in the lower section of the reaction tank, fluid from an upper section of the reaction tank, separating, by the biomass separation device, biomass from liquid in the received fluid, and separately discharging, by the biomass separation device, the biomass and the liquid, discharging clean liquid out of the apparatus.

### Brief description of the drawings

The present invention will be discussed in more detail below, with reference to the attached drawings, in which:
Fig. 1 depicts a vertical cross section of the anaerobic purification apparatus according to embodiments of the present invention.
Fig. 2: depicts a perspective cross section of a part of the anaerobic purification apparatus according to embodiments of the present invention.
Fig. 3 shows a cross section of the biomass recirculation unit according to embodiments of the present invention.
Fig. 4 depicts a vertical cross section of the anaerobic purification apparatus according to embodiments of the present invention.
Fig. 5: depicts a perspective cross section of a part of the anaerobic purification apparatus according to embodiments of the present invention.
Fig. 6 shows a cross section of the biomass recirculation unit according to embodiments of the present invention.
Fig. 7A depicts a vertical cross-section of the purification device according to embodiments of the present invention.
Fig. 7B depicts a vertical cross-section of the purification device according to embodiments of the present invention.
Fig. 8 illustrates a flowchart describing method steps according to an embodiment of the present invention.

The figures are meant for illustrative purposes only, and do not serve as restriction of the scope or the protection as laid down by the claims.

### Description of embodiments

Although the description will be made based on purification of fluid in general, it is preferably applied to wastewater, but it should be apparent for a skilled person that any other suitable fluid can be used.

Before undergoing a detailed description of the figures, it should be noted that throughout the application, terms such as above, below, upper/middle/lower section, upper/lower part, top/bottom section, top/bottom part, and the like, are used. Although not specifically indicated, these definitions refer to a position in which the apparatus (purification device) is in operation, or ready to be in operation.

-Also throughout the description, terms such as vertical cross-section and horizontal cross-section are used. A vertical cross-section should be understood as a cross-section made along a longitudinal plane including a longitudinal axis (represented by Y in at least some of the figures), and a horizontal cross-section should be understood as a cross-section made along the transversal plane including a transversal axis (represented as X in at least some of the figures). Throughout the figures, like numbers refer to the same features.

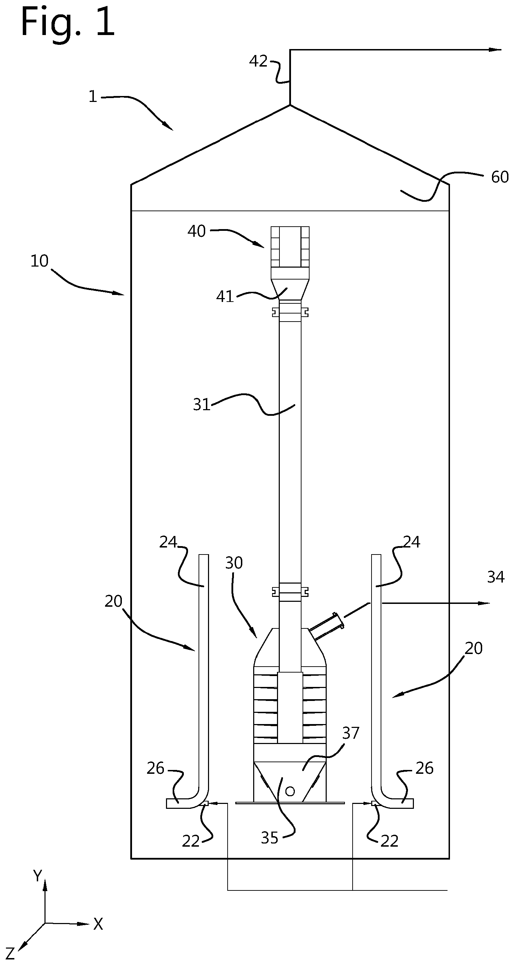

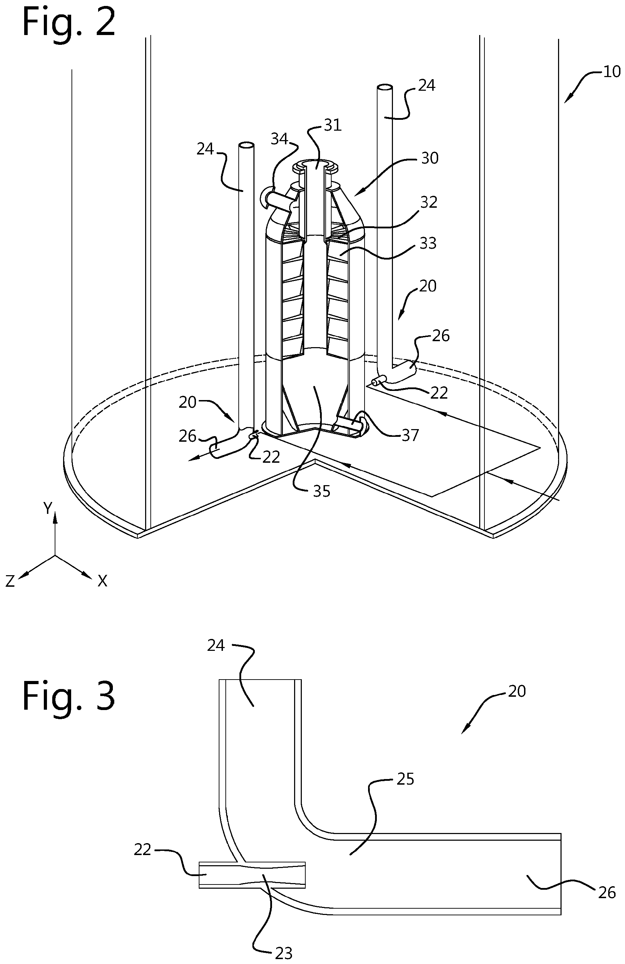

Fig. 1 depicts a vertical cross section of the anaerobic purification apparatus according to embodiments of the present invention. Fig. 2: depicts a perspective cross section of a part of the anaerobic purification apparatus according to embodiments of the present invention. Fig. 1 and Fig. 2 will be described in parallel, for ease of explanation.

The anaerobic purification apparatus 1 comprises a reactor tank 10, a biomass recirculation unit 20, a biomass separation device 30, and a gas separation device 40.

The biomass recirculation unit 20 is at least partially located in the lower section of the reactor tank, such as the lower half or the lower third part, such as in contact with the bottom of the reactor tank. The biomass recirculation unit 20 comprises a biomass collecting system 24, which is configured to collect biomass from the biomass bed at the middle section of the reactor tank, and to bring it to the lower section of the reactor tank 10. In the embodiment of Fig. 1 and Fig. 2, the biomass collecting system 24 consists of a collecting pipe, but may also comprise multiple pipes, and it may also comprise an inlet funnel on the collecting pipe to facilitate easy transport of biomass from the biomass bed into the pipe, in a vertical downward direction. The length of the pipe can vary from 20% of the height of the reactor tank to 60% of the height of the reactor tank, more preferably from 25% to 50%. For example, the length of the pipe can vary from 1 up to 6 meters, more preferably from 2 up to 5 meters, and more preferably from 4 up to 5 meters, for a tank height of between 8 and 16 meters. Such length enables to suction biomass from a middle section of the biomass bed (a middle section of the reactor tank) and to return it to the bottom section of the biomass bed. At a lower part of the biomass collecting system 24, the collecting pipe may form a bend with an angle which varies between 90 degrees and 135 degrees with respect to the longitudinal axes of the collecting pipe, and it is of approximately 90 degrees in the embodiment shown in Fig. 1 and 2.

The biomass recirculation unit 20 further comprises an inlet system 22. In the embodiment of Fig. 1 and 2, the inlet system comprises an inlet pipe, but it may also comprise a plurality of inlet pipes. The inlet pipe of the inlet system 22 comprises a constricted nozzle 23 (visible in Fig. 3), and is connected to the bend, so that influent water is discharged through the constricted nozzle 23. The section of the biomass recirculation unit 20 in which the influent water is discharged from the inlet system 22 is a mixing segment 25. The high velocity of the water in the constricted nozzle 23 creates a suction effect that drags biomass through the biomass collecting system 24 downwards, into the mixing segment 25. That is, the constricted nozzle 23 creates a jet system in which the influent water is the motive liquid that creates the suction effect. Biomass and inlet water mix in the mixing segment 25. The mixing segment 25 can be a pipe segment, such as in the embodiment of Fig. 1 and 2, or in another embodiment, this can be a mixing chamber. Mixed influent and biomass exit the biomass recirculation unit and enter the lower section of the reactor tank 10 through an outlet system 26, which may comprise one or more outlet pipes.

By creating additional mixing in the bottom (lower part) of the reactor and recirculation of biomass from a higher part (middle section) in the reactor down to a lower part, the biomass that is highly loaded with COD in the reactor bottom is displaced by biomass from an elevated height that has not seen a lot of COD. This allows to achieve a better mixing, and in turn to achieve better quality of the granular biomass, which results in a better retention of the granular biomass in the up-flow reactor.

In the embodiment of Fig. 1 and 2, the biomass recirculation unit 20 comprises two sets, each set comprising one biomass collecting system 24 (collecting pipe), one inlet system 22 (inlet pipe), one mixing segment 25 and one outlet system 26 (outlet pipe). However it should be noted that the biomass recirculation unit 20 according to the present invention may also comprise one set, or more than two sets. Having two sets, approximately equally spaced apart, allows to collect biomass from different places in the reactor tank 10 and to bring it to different places in the lower section of the reactor tank 10, more evenly distributing the biomass through the biomass bed. However, it should be apparent for the skilled person that other configurations are also possible.

The biomass separation device 30 is located in the lower section inside the reactor tank 10, and it is configured to receive fluid from an upper section of the reactor tank, to separate biomass (solids) from liquid in the fluid, and to separately discharge the biomass and the liquid, discharging clean liquid out of the apparatus. In the embodiment of Fig. 1 and 2, the biomass separation device comprises a central pipe 31 running vertically or substantially vertically, when in operation, through which fluid is received from the upper section of the reactor tank 10. A lower end of the central pipe 31 discharges in a biomass collection chamber 35, in the bottom section of the biomass separation device 30, preferably in a central location below the biomass separation device 30. The biomass separation device further comprises at least one concentric enclosure 32 (more visible in Fig. 2) surrounding the central pipe 31 and defining at least one concentric cavity. The at least one concentric cavity is filled with spiral-shaped channels 33 which run in the vertical direction describing a spiral shape around the central pipe 31. The central pipe 31 is configured to receive the fluid from the upper section of the reactor tank 10 and to allow the fluid to flow downwards until reaching the bottom section of the biomass separation device 30. In the bottom section, in a cavity forming the biomass collection chamber 35, the fluid that comes from the central pipe 31 has space to turn, using its own energy, and move upwards through the plurality of spiral-shaped channels 33 of the concentric cavities. Due to the friction with the walls of the spiral-shaped channels 33, as fluid moves upwards, biomass (solids) which could be still present, separate from the liquid and move downwards due to their higher density, and settle in the biomass collection chamber 35. The at least one enclosure may define a cylindrical shape, and the biomass collection chamber 35 may have a conical or funnel-like shape, with the opening at the bottom, in the narrow end of the funnel, facilitating the settling of the solid particles (biomass).

A top section of the biomass separation device 30 located above the at least one concentric enclosure may be connected to an effluent system 34 which is configured to carry clean liquid that has flowed upwards out of the apparatus. The top section of the biomass separation device 30 may comprise at least one dividing structure for creating at least two compartments into which the liquid that has flowed upwards through the spiral-shaped channels 33 can arrive, wherein each compartment is connected to the effluent system 34. This allows to have a controlled distribution of the liquid that reaches the top of the biomass separation device 30.

The biomass separation device comprises at least one concentric enclosure surrounding the central pipe 31, but it can also comprise at least two concentric enclosures, or more, depending on the size of the biomass separation device 30.

It should be noted that the biomass separation device of the embodiment of Fig. 1 and 2 is one possibility, but it should be evident for a skilled person that a biomass separation device with a different structure not comprising the concentric cavities, preferably also located at the bottom (lower) section of the reactor tank, can be used in a purification apparatus, in combination with the biomass recirculation unit 20 of the present invention.

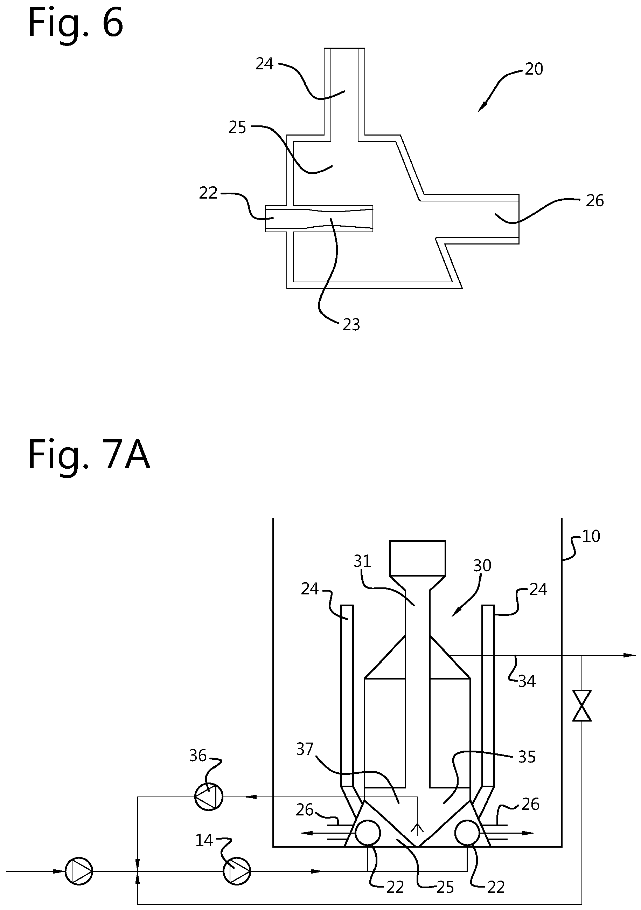

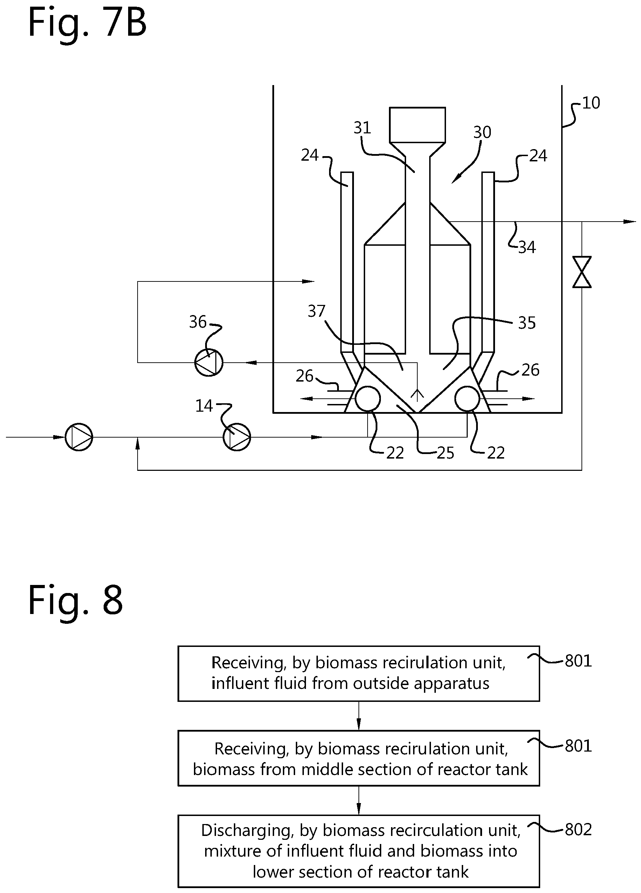

The effluent system 34 may comprise one or more effluent pipes, and may bring the clean liquid (effluent) outside of the anaerobic purification apparatus, or may recirculate at least part of the clean liquid back to the reactor tank, as will be seen below in relation with Fig. 7A and Fig. 7B. The biomass that has been separated from the liquid is brought out of the biomass collection chamber 35 through a biomass extraction pump 36 and a biomass extraction pipe 37, which may bring the biomass outside of the apparatus, or back into the reactor tank 10. This will be explained in detail in Fig. 7A and 7B.

In Fig. 1, the anaerobic purification device also shows a gas separation device 40. The fluid in the reactor tank 10 which reacts with the biomass in the sludge (biomass) bed and generates biogas moves upwards. In the upper section of the reactor tank 10, a gas separation device 40 may be located, to separate gas from the liquid and biomass in the fluid. Preferably, the top part, more preferably the top edge, or the top surface, of the gas separation device 40, is located at the fluid level 60 or below the fluid level, so that the remaining elements of the apparatus inside the reactor tank 10 are located below the fluid level. The gas separation device 40 can have different shapes. In an embodiment of the present invention, as seen in Fig. 1, the gas separation device 40 can comprise at least one concentric enclosure surrounding a central section, the at least one concentric structure defining at least one concentric cavity, wherein the at least one concentric cavity comprises a plurality of spiral-shaped channels, so that the fluid that has reached the upper section of the reactor tank 10 enters the gas separation device 40 through a top opening of the at least one concentric enclosure. As the fluid flows downwards through the spiral-shaped channels, gas particles will separate from the liquid and solids due to the walls of the spiral-shaped channels, and gas will move upwards, to be collected at the upper section of the reactor tank 10 and to be discharged via a gas outlet 42 located at the upper part of the reactor tank (of the apparatus). Fluid comprising liquid and solids will then flow downwards through a fluid outlet 41 which connects to a downer 31, which corresponds to or is connected to the central pipe 31 of the biomass separation device. As indicated above, it should be noted that the gas separation device of the embodiment of Fig. 1 and 2 is one possibility, but it should be evident for the skilled person that a gas separation device with a different structure not comprising the concentric cavities, preferably also located at the upper section of the reactor tank, can be used in a purification apparatus, in combination with the biomass recirculation unit of the present invention.

Fig. 3 shows a cross section of the biomass recirculation unit according to embodiments of the present invention. In Fig. 3, the parts of the biomass recirculation unit 20 which have been explained above in relation with Fig. 1 and Fig. 2 can be seen in more detail: the inlet system 22, the biomass collecting system 24, the mixing segment 25 and the outlet system 26. As seen more clearly in Fig. 3, the biomass collecting system 24 defines a bent which ends or overlaps with the mixing segment 25. The inlet system 22 is also connected to the mixing segment 25, and influent, mixed with the biomass brought into the mixing segment 25 due to the suction effect, then leaves the biomass recirculation unit through the outlet system 26. The biomass recirculation unit according to this embodiment can be placed separated from the rest of the elements in the reactor tank (gas separation device and biomass separation device) and can be individually placed in existing anaerobic purification devices.

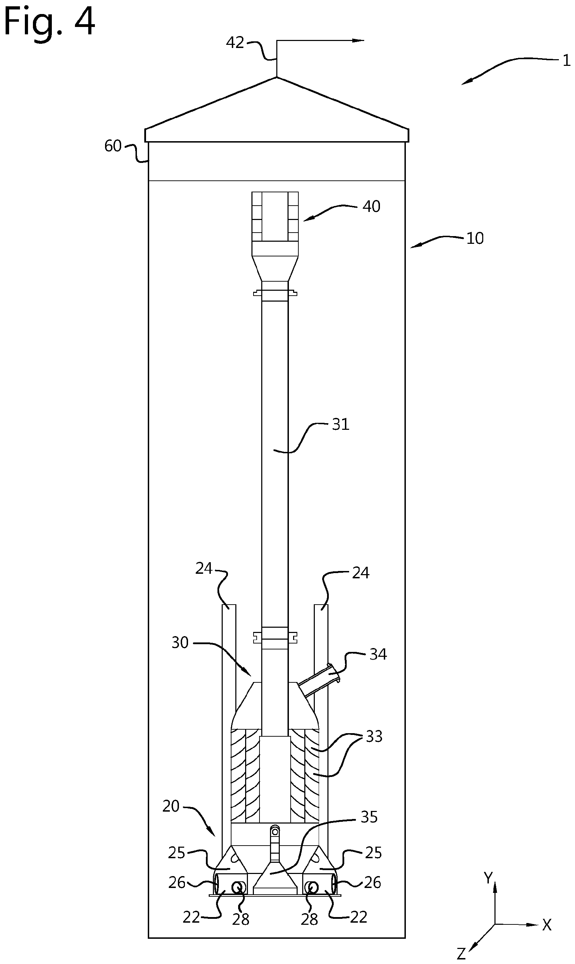

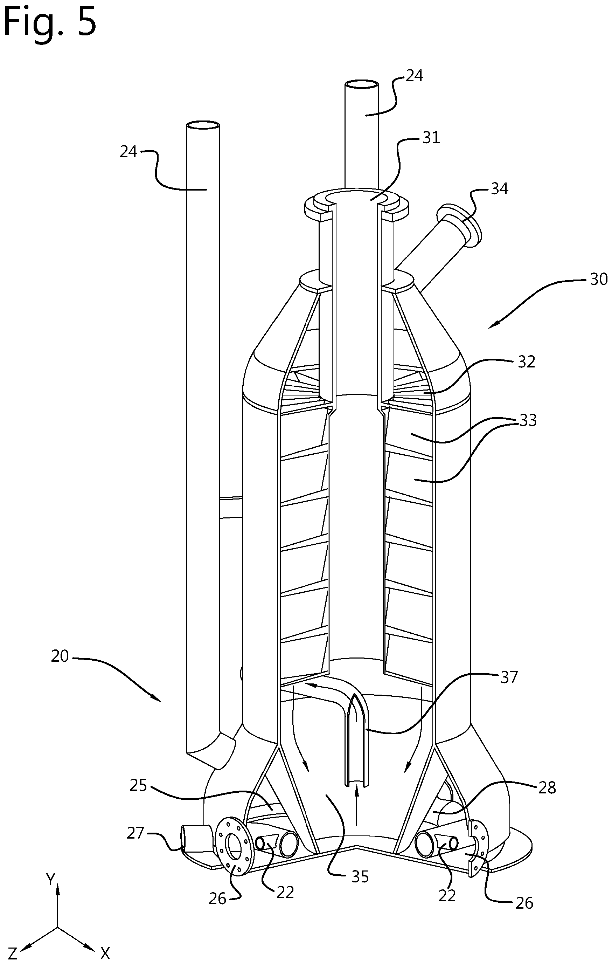

Fig. 4 depicts a vertical cross section of the anaerobic purification apparatus according to embodiments of the present invention. Fig. 5: depicts a perspective cross section of a part of the anaerobic purification apparatus according to embodiments of the present invention. Fig. 6 shows a cross section of the biomass recirculation unit according to embodiments of the present invention. Fig. 4, Fig. 5, and Fig. 6 will be described in parallel, for ease of explanation.

The anaerobic purification apparatus of Figs. 4, 5 and 6 is similar to that of Figs. 1, 2 and 3. A description of the biomass separation device 30 and the gas separation device 40 will be omitted as it is similar to the description given above.

Figs. 4, 5 and 6 describe a biomass recirculation unit 20 which has some different features from that of Figs. 1, 2 and 3. In the biomass recirculation unit 20 of Figs. 4, 5 and 6, the mixing segment 25 corresponds to a mixing chamber 25. The inlet system 22 comprises at least one feeding pipe 27 (visible in Fig. 5, for reasons of perspective), through which influent fluid from outside the apparatus enters. However, the inlet system according to this embodiment has additional pipes. It comprises also a transport pipe 28 and at least one inlet pipe 22 comprising the constricted nozzle 23 (more clearly visible in Fig. 6). A first end of the at least one feeding pipe 27 is configured to receive the influent fluid and a second end is connected to the transport pipe 28. The transport pipe 28 is located inside the mixing chamber 25, runs inside the mixing chamber and ends in or is further connected to the at least one inlet pipe 22, so that the influent fluid exits the transport pipe 28 and enters the mixing chamber 25 via the constricted nozzle 23 of the at least one inlet pipe 22. Note that the reference number of the inlet pipe is the same as the reference number of the inlet system, as it is simplest implementation, as seen in Figs. 1, 2 and 3, the inlet system comprises an inlet pipe, which corresponds to the inlet pipe of Figs. 4, 5 and 6.

The mixing chamber 25 can have various shapes such as a cubical box, or for example a toroidal shape or circular donut shape as in Figs. 4, 5 and 6. The position of the mixing chamber 25 is preferably in the lower part of the reactor tank 10, such as in on the bottom of the reactor tank, more preferably at least partially below the biomass separation device 30. The function of the mixing chamber 25 (or of the mixing segment) is to mix biomass from the biomass collecting system 24 with influent water and discharge the mixture into the lower part of the reactor tank 10 through one or multiple outlet pipes of the outlet system 26. With this structure, the mixing chamber 25 removes the need to connect one biomass collecting pipe 24 to one inlet pipe 22 and to one outlet pipe 26. This means that one or more biomass collecting systems with collecting pipes 24, inlet systems 22 with constricted nozzles 23, and outlet systems 26 with outlet pipes can be connected to a single mixing chamber 25. This also allows for a more compact structure formed by the biomass recirculation unit 20 and the biomass separation device 30.

At least partially below the biomass separation device 30, a biomass collection chamber 35 is located, preferably in a central location below the biomass separation device 30. The mixing chamber 25 preferably surrounds the biomass collection chamber 35, having a toroid shape revolving around the vertical axis, with the outer wall of the biomass collection chamber 35 in contact with or forming the inner wall of the toroid, that is, of the mixing chamber 25. This disposition allows to make an efficient use of the space, as it creates a compact structure. In an embodiment, the biomass separation device 30, the biomass collection chamber 35, and the mixing chamber 25 are built in one single structure or are assembled together.

The inlet system 22 of the biomass recirculation unit 20 brings influent water into the mixing chamber 25, through at least one feeding pipe 27. This influent water comprises fluid from outside the apparatus, that can be influent or recycled treated effluent, and it may also comprise recycled biomass which has left the device through the biomass extraction pump 36 and biomass extraction pipe 37 connected to the biomass collection chamber 35 and is recirculated. Inside the mixing chamber 25, the transport pipe 28 is connected to the feeding pipe 27, and the transport pipe 28 is also connected to at least one inlet pipe 22 which has a constricted nozzles 23, through which the influent can enter the mixing chamber 25. The interior of the mixing chamber 25 forms a cavity in which the transport pipe 28 is located, and said cavity is configured to contain biomass which is collected from the reactor tank 10, more specifically from a middle section of the reactor tank, by the biomass collecting system 24, due to the suction effect caused by the influent entering the mixing chamber 25 through the constricted nozzle 23 of the inlet pipe 22. The biomass collecting system may comprise at least one collecting pipe, preferably at least two collecting pipes as seen in Fig. 4. Biomass and inlet water are mixed in the mixing chamber 25 and discharged through one or multiple outlet pipes or outlet openings 26 of the outlet system, connecting the mixing chamber 25 with the reactor tank 10. The mix of influent and biomass discharged from the mixing chamber 25 enters the lower section of the reactor tank 10.

In Fig. 6, the parts of the biomass recirculation unit 20 which have been explained above in relation with Fig. 4 and Fig. 5 can be seen in more detail: the inlet pipe 22 of the inlet system, connected to the transport pie 28 (not visible in Fig. 6), the biomass collecting system 24, the mixing chamber 25 and the outlet system 26. As seen more clearly in Fig. 6, the biomass collecting system 24 discharges biomass into the mixing chamber 25. The inlet pipe 22 comprising the constricted nozzle 23 also discharges into the mixing chamber 25, and influent, mixed with the biomass brought into the mixing segment 25 due to the suction effect created by the constricted nozzle 23, then leaves the biomass recirculation unit through the outlet system 26.

Fig. 7A depicts a vertical cross-section of the purification device according to embodiments of the present invention. The solids (granulated biomass) settled in the biomass collection chamber 35 are removed from the biomass collection chamber via a biomass extraction pump 36 through a biomass extraction pipe 37. The biomass may be recirculated so as to be reintroduced into the biomass recirculation unit 20 together with influent received from outside the apparatus. In the embodiment of Fig. 7A, which can be applied to the apparatus described in any one of the previous figures, the pipe system entering and exiting the reactor tank 10, which is not visible in the previous figures, is visible.

In the embodiment of Fig. 7A, influent received from outside the apparatus is transported by the inlet system 22 (which is now depicted comprising long pipes that discharge in the biomass recirculation unit), with the aid of an influent pump 14. This influent, in the inlet system, is then mixed with solids (biomass) removed from the biomass collection chamber 35, which is pumped out of the biomass collection chamber 35 through a biomass extraction pipe 37 (also visible in Fig. 5) by a biomass extraction pump 36. Through the inlet system 22, the fluid received from outside the apparatus and the biomass removed from the biomass collection chamber 35 are then mixed and transported to the biomass recirculation unit 20. In the embodiment of Fig. 7A, thus, biomass separated from the liquid is recirculated back into the mixing chamber 25, together with the influent fluid which is received from the outside, and this biomass with the fluid will then be mixed with additional biomass collected from a higher (middle) section of the reactor tank 10 in the mixing chamber 25 and into the lower section of the reactor tank 10.

In the embodiment of Fig. 7A, in addition or alternatively, part of the clean liquid (effluent) that is removed from the apparatus through the effluent system 34, is recirculated and mixed with the influent that is received from outside. Depending on the amount of impurities of the influent received from outside, using part of clean liquid can help in reducing the impurity concentration that is discharged in the lower section of the reaction tank 10.

Fig. 7B depicts a vertical cross-section of the purification device according to embodiments of the present invention. The difference with Fig. 7A lies in the fact that in the embodiment of Fig. 7B, the biomass in the biomass collection chamber 35 is not recirculated with the influent from outside the apparatus into the biomass recirculation unit 20. In the embodiment of Fig. 7B, the biomass in the biomass collection chamber 35 is separately recirculated into the reactor tank 10. This is done with the use of a biomass extraction pipe 37 by action of a biomass extraction pump 36. The biomass is reintroduced in the sludge bed inside the reactor tank, at a height lower than the height where the biomass is collected into the biomass recirculation unit. The embodiment of Fig. 7B provides an alternative way of reutilizing the separated biomass.

Fig. 8 illustrates a flowchart describing method steps according to an embodiment of the present invention. First, the method comprises the step of receiving 801, by the biomass recirculation unit 20, which is preferably located in a lower section of the reaction tank 10, influent fluid from outside the apparatus and biomass from a middle section of the reactor tank. This receiving step has been described above in relation with the previous figures.

Step 802 comprises discharging, by the biomass recirculation unit 20, a mixture of the influent and the biomass into a lower section of the reactor tank 10. As seen above, an advantage of collecting biomass from a higher section of the reactor tank, and reintroducing it into a lower section, allows to bring to the lower section biomass which has a lower COD concentration, and which is better mixed, allowing to achieve a better mixing of the biomass and the fluid.

The biomass recirculation unit 20 comprises an inlet system 22 through which the influent fluid enters, and the method further comprises, as the influent fluid leaves the inlet system 22 through a constricted nozzle 23, creating a suction effect which causes the biomass from the middle section of the reactor tank 10 to be drawn off into the biomass recirculation unit 20, to be mixed with the influent fluid.

The method may further comprise receiving, by the biomass separation device 30, which is preferably also located in the lower section of the reaction tank, fluid from an upper section of the reaction tank 10. According to an embodiment, this fluid may be coming from a gas separation device 40 located in the upper section. The method may further comprise separating, by the biomass separation device 30, solids (biomass) from liquid in the received fluid, separately discharging, by the biomass separation device 30, the biomass and the liquid.

It should be noted that the steps of the method are described as starting in step 801, but the purification process occurs continuously during a certain amount of time in which the flow of steps is repeated, and the steps should thus be considered as a continuity.

The figures are meant for illustrative purposes only, and do not serve as restriction of the scope or the protection as laid down by the claims.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

### List of reference symbols

- 1: Anaerobic purification apparatus
- 10: Reactor tank
- 14: Influent pump
- 20: Biomass recirculation unit
- 22: Inlet system or inlet pipe (of biomass recirculation unit)
- 23: Constricted nozzle
- 24: Biomass collecting system or collecting pipe
- 25: Mixing segment/chamber
- 26: Outlet system or outlet pipe (of biomass recirculation unit)
- 27: Feeding pipe (of inlet system)
- 28: Transport pipe (of inlet system)
- 30: Biomass separation device
- 31: Central pipe
- 32: Concentric enclosures
- 33: Spiral-shaped channels
- 34: Effluent system
- 35: Biomass collection chamber
- 36: Biomass extraction pump
- 37: Biomass extraction pipe
- 40: Gas separation device
- 42: Gas outlet
- 60: Fluid level

## Claims

1. A biomass recirculation unit (20) for an anaerobic purification apparatus (1) of a fluid such as wastewater, the biomass recirculation unit comprising:
- an inlet system (22) configured to be located in a lower section inside a reactor tank (10) of the apparatus, and configured to receive influent fluid from outside the apparatus,
- a biomass collecting system (24) configured to draw off biomass from a middle section in the reactor tank (10) and bring the biomass into the biomass recirculation unit (20),
- a mixing segment (25) configured to be located in a lower section inside the reactor tank (10), connected to the inlet system (22) and the biomass collecting system (24), and configured to receive and mix the influent fluid and the biomass, and
- an outlet system (26) connected to the mixing segment (25) and configured to discharge a mixture of the influent fluid and the biomass into the lower section of the reactor tank (10),
wherein the inlet system (22) comprises a constricted nozzle (23) configured to, as the influent fluid flows from the inlet system (22) to the mixing segment (25) through the constricted nozzle (23), create a suction effect which causes the biomass collecting system (24) to draw off the biomass from the middle section of the reactor tank (10) into the mixing segment (25).

2. An anaerobic purification apparatus (1) of a fluid such as wastewater, the apparatus comprising:
- a reaction tank (10);
- at least one biomass recirculation unit (20) according to claim 1, and
- at least one biomass separation device (30) located in the lower section inside the reactor tank (10), the at least one biomass separation device configured to receive fluid from an upper section of the reactor tank (10), to separate biomass from liquid in the fluid, and to separately discharge the biomass and the liquid, discharging clean liquid out of the apparatus.

3. The apparatus (1) according to claim 2, wherein the biomass collecting system (24) comprises or is connected to at least one biomass collecting pipe with an upper end located in the middle section inside the reactor tank (10), at a height from a bottom of the reactor tank between 20% of a height of the reactor tank and 60% of the height of the reactor tank, more preferably between 25% and 50%.

4. The apparatus (1) according to claim 2 or 3, wherein the mixing segment (25) corresponds to a mixing chamber (25), wherein the inlet system (22) comprises at least one feeding pipe (27), a transport pipe (28) and at least one inlet pipe (22) comprising the constricted nozzle (23), wherein a first end of the at least one feeding pipe (27) is configured to receive the influent fluid and a second end is connected to the transport pipe (28), wherein the transport pipe (28) is located inside the mixing chamber (25), and wherein the transport pipe (28) is further connected to the at least one inlet pipe (22), so that the influent fluid exits the transport pipe (28) and enters the mixing chamber (25) via the constricted nozzle (23) of the at least one inlet pipe (22).

5. The apparatus (1) according to claim 4, wherein the biomass collecting system (24) is configured to discharge the biomass into the mixing chamber (25) so that the biomass is mixed with the influent fluid which enters the mixing chamber (25) via the constricted nozzle (23) of the at least one inlet pipe (22).

6. The apparatus (1) according to any one of claims 4 or 5, wherein the outlet system (26) comprises at least one outlet pipe connected on a first end to the mixing chamber (25) and on a second end discharging into the lower section of the reactor tank (10).

7. The apparatus (1) according to any one of claims 2 - 6, wherein the at least one biomass separation device (30) comprises a substantially vertical central pipe (31) and at least one concentric enclosure (32) surrounding the central pipe and defining at least one concentric cavity, wherein the central pipe is configured to receive the fluid from the upper section of the reactor tank (10) and to allow the fluid to flow downwards until a bottom section of the biomass separation device, and wherein the at least one concentric cavity comprises a plurality of spiral-shaped channels (33) configured to allow the fluid to flow upwards and cause the biomass to slide downwards.

8. The apparatus (1) according to claim 7, wherein a top section of the at least one biomass separation device (30) located above the at least one concentric enclosure (32) is connected to an effluent system (34) configured to carry the clean liquid that has flowed upwards out of the apparatus.

9. The apparatus (1) according to any one of claims 7 - 8, further comprising at least one gas separation device (40) located in the upper section of the reactor tank (10), wherein a fluid outlet (41) of the at least one gas separation device (40) is connected to a downer pipe which corresponds to or is connected to the central pipe (31) of the at least one biomass separation device (30).

10. The apparatus (1) according to any one of claims 2 - 9, wherein the at least one biomass separation device (30) comprises a biomass collection chamber (35) located at a bottom section of the at least one biomass separation device (30), and configured to receive the biomass and to discharge the biomass outside of the at least one biomass separation device.

11. The apparatus (1) according to claim 10, further comprising a biomass extraction pump (36) configured to bring the biomass from the biomass collection chamber (35) into the inlet system (22) of the at least one biomass recirculation unit (20).

12. The apparatus (1) according to claim 10, further comprising a biomass extraction pump (36) configured to bring the biomass from the biomass collection chamber (35) into the reactor tank (10).

13. The apparatus (1) according to any one of claims 2 - 12, comprising a plurality of biomass separation devices (30) and a plurality of biomass recirculation units (20), wherein each pair of biomass separation device and biomass recirculation unit is configured to operate according to any of claims 2 - 12.

14. A method for anaerobic purification of a fluid such as wastewater, by an anaerobic purification apparatus (1), comprising the steps of:
- receiving, by a biomass recirculation unit (20) of the apparatus, influent fluid from outside the apparatus and biomass from a middle section of a reactor tank (10) of the apparatus, and
- discharging, by the biomass recirculation unit (20), a mixture of the influent fluid and the biomass into a lower section of the reactor tank,
wherein the biomass recirculation unit (20) comprises an inlet system (22) through which the influent fluid enters, and wherein the method further comprises, as the influent fluid leaves the inlet system (22) through a constricted nozzle (23), creating a suction effect which causes the biomass from the middle section of the reactor tank (10) to be drawn off into the biomass recirculation unit (20), to be mixed with the influent fluid.

15. The method according to claim 14, further comprising the steps of:
- receiving, by a biomass separation device (30) located in the lower section of the reaction tank (10), fluid from an upper section of the reaction tank,
- separating, by the biomass separation device (30), biomass from liquid in the received fluid, and
- separately discharging, by the biomass separation device (30), the biomass and the liquid, discharging clean liquid out of the apparatus.
